# EUROPEAN PATENT APPLICATION

(11) **EP 4 722 708 A1**
(43) Date of publication of application: **08.04.2026**
(21) Application number: 25206181.7
(22) Date of filing: 01.10.2025
(51) Int. Cl.: G01N 29/04, G01N 29/06, G01N 29/44

(54) **AUTOMATED METHOD AND SYSTEM FOR ULTRASONICALLY INSPECTING COMPONENTS**

(30) Priority: 01.10.2024 US 202418903034
(71) Applicant: RTX Corporation, Farmington, CT 06032 (US)
(72) Inventor: Calfa, Bruno Abreu, Glastonbury, CT, 06033 (US); Zhu, Hongyu, Austin, TX, 778750 (US); Lin, Yiqing, Montgomery, NJ, 08502 (US)
(74) Representative: Dehns

(57) **Abstract**

A method of and system (20) for inspecting a component (30) for an anomaly includes: performing a through-transmission ultrasonic (TTUT) inspection of a component that produces response signals; producing a C-scan map based on the response signals; performing an initial quality assessment of the C-scan map to determine if the C-scan map is acceptable or unacceptable, and if acceptable, performing a secondary quality assessment of the C-scan map that includes registering the C-scan map with a CAD file representing the component; producing a registered C-scan image using the C-scan map and the registered CAD file; analyzing the registered C-scan image to determine the presence of a potential anomaly in the component;
for a potential anomaly determined as being present, classifying the potential anomaly as relevant or irrelevant; and reporting any relevant anomaly present in the component.

## Description

### BACKGROUND OF THE DISCLOSURE

### 1. Technical Field

This disclosure relates generally to methods and systems for inspecting components in general, and to non-destructive ultrasonic inspection of components for internal defects in particular.

### 2. Background Information

Aerospace engine components may incur defects / anomalies during the manufacturing process. Non-destructive testing (NDT) inspections are performed during different stages of the manufacturing process to identify defective parts. Inspection methods include, but are not limited to, visual inspection, X-Ray, thermography, and ultrasonic testing. It is particularly difficult to inspect components that have an internal structure using only external observations. Defects such as porosity and inclusions in metallic components are particularly difficult to detect. These types of defects can grow and damage the component while the component is in service. Such internal defects are often detected by some form of excitation of the structure (ultrasonic, thermoacoustic, and the like), sensing of the excitation, and manual interpretation of the sensor signals. This manual inspection process is tedious, time consuming, subjective, and error prone. An improved NDT method and system would provide considerable benefit.

### SUMMARY OF THE DISCLOSURE

According to an aspect of the present disclosure, a method of inspecting a component for an anomaly is provided. The method includes: performing a through-transmission ultrasonic (TTUT) inspection of a component, the TTUT inspection producing response signals; producing a C-scan map based on the response signals; performing an initial quality assessment of the C-scan map to determine if the C-scan map is acceptable or unacceptable; if the C-scan map is determined to be acceptable, performing a secondary quality assessment of the C-scan map that includes registering the C-scan map with a computer-aided design file representing the component; producing a registered C-scan image using the C-scan map and the registered computer-aided design file; analyzing the registered C-scan image to determine the presence of a potential anomaly in the component; for a potential anomaly determined as being present, classifying the potential anomaly as a relevant anomaly or an irrelevant anomaly; and reporting any said relevant anomaly present in the component.

In any of the aspects or embodiments described above and herein, the component has first and second side surfaces opposite one another, and the step of performing the TTUT inspection of the component includes: using an ultrasonic transmitter to produce first ultrasonic signals incident to the first side surface; and using an ultrasonic receiver to receive second ultrasonic signals emitted from the second side surface. The second ultrasonic signals may result from the incident first ultrasonic signals. The ultrasonic receiver produces the response signals, and the response signals are representative of the second ultrasonic signals that have traversed the component between the first and second side surfaces.

In any of the aspects or embodiments described above and herein, a corrupt C-scan map may be unacceptable.

In any of the aspects or embodiments described above and herein, the C-scan map may be a two-dimensional (2D) map of signal amplitudes of the response signals.

In any of the aspects or embodiments described above and herein, the registered C-scan image may be produced by aligning the signal amplitudes in the original C-scan map to a stencil image generated from a three-dimensional computer-aided model.

In any of the aspects or embodiments described above and herein, the secondary quality assessment of the C-scan map may include determining whether the C-scan map completely represents an interrogation region of the component or partially represents the interrogation region of the component.

In any of the aspects or embodiments described above and herein, the step of determining whether the C-scan map completely represents the interrogation region of the component or partially represents the interrogation region of the component may include a calibration step.

In any of the aspects or embodiments described above and herein, the secondary quality assessment of the C-scan map may include determining a presence of system drift.

In any of the aspects or embodiments described above and herein, the step of determining the presence of system drift may include performing a statistical analysis of the signal amplitudes to determine if a distribution of signal amplitudes in the C-scan map is shifted from of a distribution of signal amplitudes in a reference C-scan map.

In any of the aspects or embodiments described above and herein, the secondary quality assessment of the C-scan map may include determining a scan line drift by analyzing a signal amplitude contour surrounding a cavity in the component.

In any of the aspects or embodiments described above and herein, the step of analyzing a signal amplitude contour surrounding a cavity in the component may include comparing the signal amplitude contour surrounding the cavity to a smoothed signal amplitude contour surrounding the cavity.

In any of the aspects or embodiments described above and herein, the secondary quality assessment of the C-scan map may include identifying a low signal amplitude region that is attributable to a geometric region of the component and not attributable to a potential anomaly.

In any of the aspects or embodiments described above and herein, the step of performing the TTUT inspection of the component may include performing a plurality of TTUT inspections, and the step of producing a C-scan map based on the response signals may include producing a C-scan map based on the response signals for each respective TTUT inspection, and the step of performing the initial quality assessment of the C-scan map may include performing the initial quality assessment of the C-scan map for each TTUT inspection, and the initial quality assessment may further include determining if any TTUT inspection of the plurality of TTUT inspections is unavailable, and if any TTUT inspection of the plurality of TTUT inspections is unavailable then the inspection process of the component is terminated.

In any of the aspects or embodiments described above and herein, a first TTUT inspection of the plurality of TTUT inspections may be performed at a first resolution, and a second TTUT inspection of the plurality of TTUT inspections may be performed at a second resolution, wherein the first resolution is different from the second resolution.

According to an aspect of the present disclosure, a system for inspecting a component for an anomaly is provided. The component having a first side surface and a second side surface, wherein the first side surface is opposite the second side surface. The system includes an ultrasonic transmitter, an ultrasonic receiver, and a controller. The controller is in communication with the ultrasonic transmitter, the ultrasonic receiver, and a non-transitory memory storing instructions. The controller is configured to execute the instructions and the executed instructions cause the controller to: control the ultrasonic transmitter to produce first ultrasonic signals incident to the first side surface; control the ultrasonic receiver to receive second ultrasonic signals emitted from the second side surface, which second ultrasonic signals result from the incident first ultrasonic signals, and produce response signals representative of the second ultrasonic signals that have traversed the component between the first and second side surfaces; produce a C-scan map based on the response signals; perform an initial quality assessment of the C-scan map to determine if the C-scan map is acceptable or unacceptable; if the C-scan map is determined to be acceptable, perform a secondary quality assessment of the C-scan map that includes registering the C-scan map with a computer-aided design file representing the component; produce a registered C-scan image using the C-scan map and a stencil image generated from a computer-aided design file; analyze the registered C-scan image to determine the presence of a potential anomaly in the component; for a potential anomaly determined as being present, classify the potential anomaly as a relevant or an irrelevant anomaly; and report any relevant anomaly present in the component.

In any of the aspects or embodiments described above and herein, the C-scan map may be a two-dimensional (2D) map of signal amplitudes of the response signals, and the registered C-scan image may include an aligned image using the signal amplitudes and the stencil image.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a schematic illustration of a system embodiment for ultrasonically inspecting a component.
FIG. 2 is a flow chart of a present disclosure methodology embodiment.
FIG. 3 is a flow chart diagrammatically illustrating functions within a module embodiment of the present disclosure.
FIG. 4 is a diagrammatic representation of a C-scan showing a normal c-scan image of a cavity and a C-scan image of the same cavity with shifted scan lines.
FIG. 5 is a flow chart diagrammatically illustrating functions within a module embodiment of the present disclosure.
FIG. 6 is a diagrammatic representation of a visual output showing a portion of a present disclosure system output report.

### DETAILED DESCRIPTION

Embodiments of the present disclosure include a system and a method for detecting an anomaly in the material of a component using a through-transmission ultrasonic (TTUT) inspection. Non-limiting examples of anomalies that may be present within the material of the component include disbonds, voids, material variations that may be associated with material contamination, or the like, or any combination thereof. As will be detailed herein, embodiments of the present disclosure include automated techniques for recognizing defects in the material of the component.

Embodiments of the present disclosure system include a through-transmission ultrasonic (TTUT) inspection system that includes an ultrasonic sensing assembly and a system controller.

The ultrasonic sensing assembly includes at least one ultrasonic transmitter and at least one ultrasonic receiver. The system is configured such that the transmitter is configured to be disposed on a first side of the component and the receiver is configured to be disposed on a second side of the component. The second side may be directly opposite the first side but that is not required. The distance between the first and second sides of the component may be referred to as the thickness of the component along a line between the transmitter and the receiver. A component to be inspected may be immersed within a component bin containing a signal couplant; e.g., water. Alternatively, a transmitter may be disposed on a first side of the component with a signal couplant disposed between the transmitter and the first side surface of the component and a receiver may be disposed on a second side of the component (opposite the first side) with a signal couplant disposed between the transmitter and the second side surface.

A non-limiting example of an ultrasonic transmitter (Tx) is a piezoelectric ultrasonic actuator that produces ultrasonic excitation signals for transmission into the component. The present disclosure is not limited to using a piezoelectric ultrasonic actuator, and in those embodiments that use a piezoelectric ultrasonic actuator, the present disclosure is not limited to any particular piezoelectric ultrasonic actuator configuration. Ultrasonic excitation signals may be in the range of 30-500kHz. As will be detailed in further detail herein, the transmitter is in communication with the control system for controlling the operation of the transmitter.

The receiver (Rx) is configured to sense ultrasonic signals within the component that "are produced in response" to the emitted ultrasonic excitation signal and to produce a transducer response signal representative of the sensed signal. The term "produced in response" refers to signals that were originally emitted from the transmitter, but may be modified (e.g., attenuated, signal amplitude variation, or the like) they traverse through the component. As will be detailed herein, the receiver is in communication with the control system; e.g., response signals produced by the signal receiver are provided to control system for processing.

The control system includes a controller that is in communication with other system components such as the signal transmitter and the signal receiver; e.g., to control the operation of the respective system component and/or to receive signals from and/or transmit signals to that system component to perform the functions described herein. The controller may include one or more of any type of computing device, computational circuit, processor(s), CPU, computer, or the like (each of which may be generically referred to as a "controller" or "control device") capable of executing a series of instructions that are stored in memory. In those embodiments wherein the controller includes more than one control device, the control devices may be in communication with one another and may be disposed in any architecture that is capable of achieving the functionality described herein. The instructions may include an operating system, and/or executable software modules such as program files, system data, buffers, drivers, utilities, and the like. The executable instructions may apply to any functionality described herein to enable the inspection system to accomplish the same algorithmically and/or coordination of system components. The controller includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The controller may include, or may be in communication with, an input device (not shown) that enables a user to enter data and/or instructions, and may include, or be in communication with, an output device configured, for example to display information (e.g., a visual display, or a printer, or the like), or to transfer data, etc. Communications between the controller and other system components may be via a hardwire connection or via a wireless connection. The control system may include other components (e.g., signal processing hardware such as amplifiers, filters, analog to digital converters, or the like) in addition to or as an alternative to the components described herein.

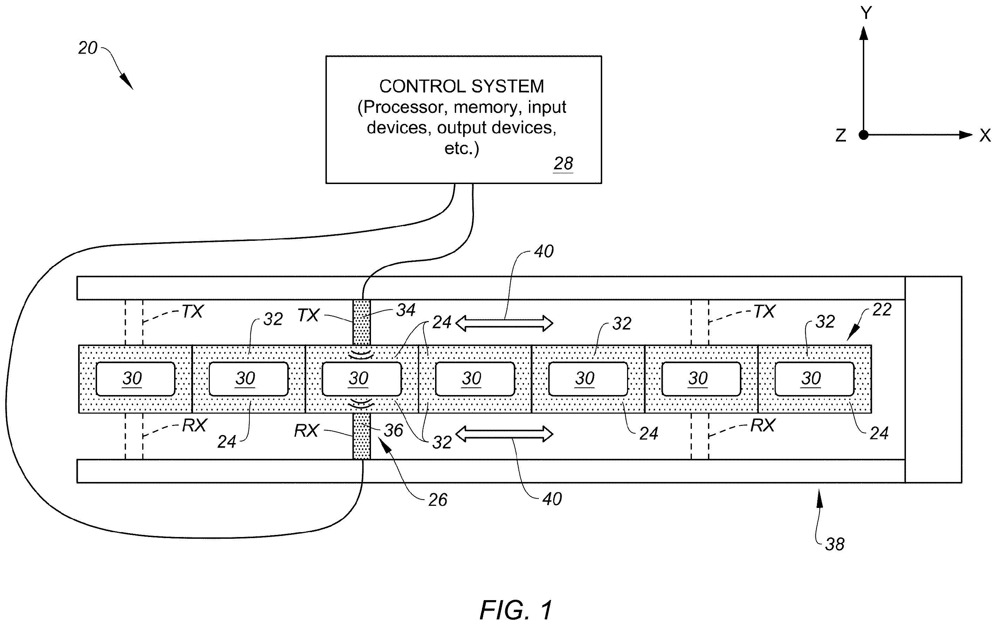

FIG. 1 diagrammatically illustrates a non-limiting present disclosure inspection system 20 embodiment that includes an inspection bench 22 having a plurality of component bins 24, an ultrasonic sensing assembly 26, and a control system 28. A component 30 is diagrammatically shown in each component bin 24. An inspection bench 22 with multiple component bins 24 may be used to facilitate inspecting multiple components 30. Each component bin 24 may be configured so the component 30 can be immersed within a signal couplant 32. The present disclosure may use any type of signal couplant 32 that allows ultrasonic signals to pass between an ultrasonic transmitter 34 and the component 30 and between the component 30 and an ultrasonic receiver 36 with an acceptable level of signal degradation.

In some present disclosure system 20 embodiments, transmitter 34 / receiver 36 pairs may be disposed at every component bin 24. In some present disclosure system 20 embodiments, transmitter 34 / receiver 36 pairs may be moved between component bins 24, thereby requiring fewer transmitter 34 /receiver 36 pairs. In the system 20 embodiment diagrammatically shown in FIG. 1, a transducer actuating system 38 is diagrammatically shown. The actuating system 38 is configured to move transmitter 34 / receiver 36 pairs relative to statically disposed component bins 24; e.g., see arrows 40. In alternative embodiments, the present disclosure system 20 may be configured to statically maintain the transmitter 34 / receiver 36 pairs and move the component bins 24 relative to the transmitter 34 / receiver 36 pairs. In yet further embodiments, the present disclosure system 20 may be configured to move both the transmitter 34 / receiver 36 pairs and the component bins 24 relative to each other. The movement of the transmitter 34 / receiver 36 pairs relative to the component bins 24, or vice versa, or both, may be along a single axis (e.g., X-axis), or a plurality of axes (e.g., within the X-Z plane), or any motion necessary for inspecting the component 30 at hand. In some embodiments, the transmitter 34 / receiver 36 pairs may be disposed generally perpendicular to the respective component 30 surface, or any other angular orientation relative to the surface that facilitates the inspection process.

Disposing the components 30 within a component bin 24 surrounded by a signal couplant 32 is understood to facilitate the inspection process, but the present disclosure does not require a component 30 to be disposed within a component bin 24 surrounded by a signal couplant 32.

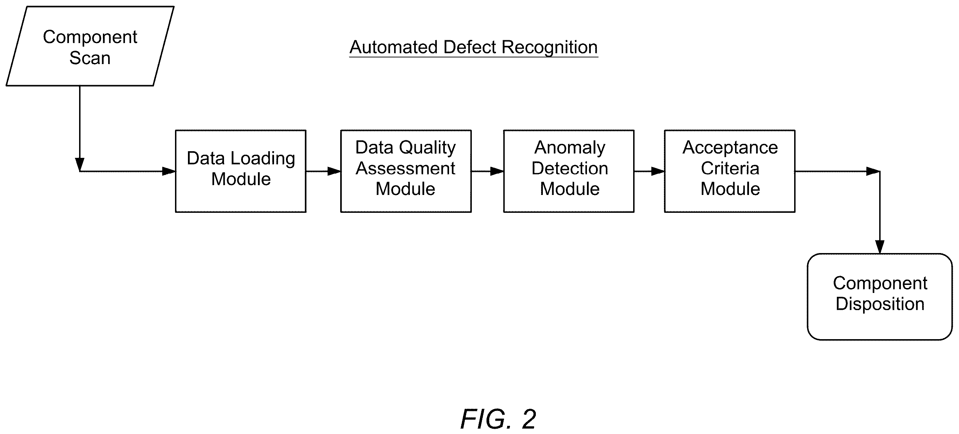

Referring to FIG. 2, the present disclosure methodology may be described in terms of the following operational modules: (1) Data Loading; (2) Data Quality Assessment; (3) Anomaly Detection; and (4) Acceptance Criteria. The present disclosure methodology may be collectively referred to as an "automated defect recognition" process or "ADR" process.

As detailed above, embodiments of the present disclosure may be configured to process multiple components 30 as a group. For example, each component 30 in the group is subject to the processes of the Data Loading module, then each component 30 in the group is subject to the processes in the Data Quality Assessment module, and so on. Processing multiple components 30 as a group provides numerous advantages (e.g., expedited processing, cost savings, and the like), but is not required. To facilitate the description herein, the present disclosure will be described in terms of group processing.

### Data Loading Module:

Referring back to FIG. 1, an inspection bench 22 is diagrammatically shown that includes a plurality of component bins 24, an ultrasonic sensing assembly 26, and a control system 28. A component 30 is diagrammatically shown in each component bin 24 surrounded by a signal couplant 32; e.g., water. Within the actions of the data loading module, the ultrasonic sensing assembly 26 (e.g., one or more transmitter 34 / receiver 36 pairs) is controlled by the control system 28 via stored instructions to ultrasonically interrogate each component 30. During the interrogation, each transmitter 34 is controlled to produce ultrasonic signals incident to a first side surface of the component 30 and the receivers 36 are controlled to receive response signals on a second side of the surface, opposite the first side surface. The region of the component 30 to be inspected may be referred to as the "interrogation region". Depending on the task at hand, the component interrogation region may be a portion of the component 30, or may be the entirety of the component 30. To facilitate the description herein, the present disclosure methodology will be described herein as the component 30 generically being inspected unless otherwise described. The receivers 36 sense the emitted signals at the second side surface (after they have traversed the component 30) and produce response signals representative of the sensed signals. The control system 28 is configured (via stored instructions) to produce a location-based signal amplitude map of the interrogation region based on the response signals produced by the receivers 36. The aforesaid signal amplitude map is referred to herein as a "C-scan". In the absence of any anomalies within the material of the component 30 under interrogation, a "normal" C-scan result will be produced. A normal C-scan may be determined by scanning one or more components 30 known to be free of anomalies. In the presence of one or more anomalies within the material of the component 30 under interrogation, however, the C-scan will show signal variations (e.g., signal amplitude variations that deviate from a normal C-scan) as a result of the anomaly. As stated herein, non-limiting examples of anomalies include disbonds, voids, material variations that may be associated with material contamination, or the like. These anomalies typically affect ultrasonic signals that are incident to the anomaly by decreasing the amplitude of the signal relative to other traversing signals that do not encounter the anomaly.

The C-scan results may be electronically stored as a data file and the data files may be stored within an electronic database. The data files may be organized by a naming convention that includes data fields such as the part number (PN) of the component 30, the serial number (SN) of the component 30, the system name (SYS), the slot number (S) in which the component 30 was ultrasonically interrogated, an inspection timestamp, and the like. The data files may include C-scan data on one or more channels, a scan plan file with instructions on trajectories and trigger points for data acquisition which can be used to derive 3-D coordinates from a 2-D C-scan image, and one or more auxiliary files containing metadata about the scan (e.g., scan resolution and pixel sizes). The present disclosure is not limited to any particular naming convention and/or data fields.

The remaining modules of the present disclosure methodology may be performed in different modes. For example, the remaining modules may be performed in a "queue" mode wherein the modules are performed periodically; e.g., at a given time interval, the modules are performed by searching for new scan data for processing. As another example, the remaining modules may be performed in a "batch" mode, wherein the modules are performed on a plurality of scan data files; e.g., unprocessed scan data files may be identified by location or otherwise flagged, and the control system 28 may be configured to perform the remaining modules relative to the unprocessed scan data files upon command.

### Data Quality Assessment Module:

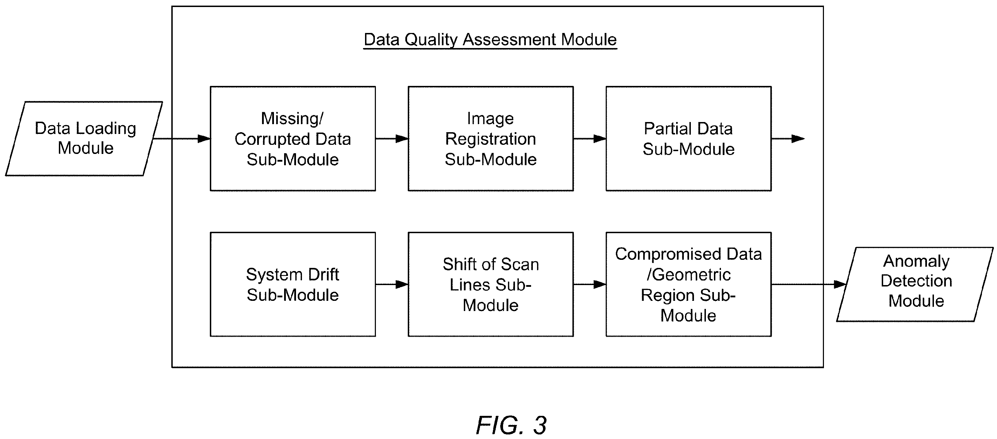

Referring to FIG. 3, embodiments of the present disclosure system 20 may include a data quality assessment module that includes a plurality of automated data quality assessment sub-modules, including but not limited to: (1) the presence of missing or corrupted C-scan files; (2) image registration; (3) the presence of partial C-scan files; (4) system drift; (5) shift of scan lines within C-scan data; and (6) compromised signal data associated with a geometric region of the component 30. These data quality assessment sub-modules provide an initial evaluation of the component scanning data. In the event some of these sub-routines (e.g., the presence of missing or corrupted C-scan files, and the presence of partial C-scan files) determine that the C-scan data is not up to appropriate standards (which may be defined by predetermined thresholds or the like), the inspection of the component 30 may be terminated, or the data loading for that component 30 may be repeated, or the inspection of that component 30 may be flagged for operator intervention. A brief description of the quality assessment sub-routines is provided hereinafter.

### Missing / Corrupted Data Quality Sub-Module:

In some present disclosure embodiments, the control system 28 may be configured (via stored instructions) to verify there are no missing or corrupted C-scan data files required for analysis. For example, some present disclosure inspection embodiments may include the production of multiple C-scans of the same component 30 at different scan resolutions. In those embodiments, the present methodology may utilize the C-scan images for each resolution in the inspection of a component 30. If the C-scan data at one or more of the predetermined resolutions is not available for whatever reason (e.g., file corrupted, file missing, or the like), then the system 20 may be configured to stop the data analysis (e.g., issue a flag) and produce a notification of the same; i.e., that the C-scan data is unacceptable for use in the remaining inspection process. The notice may trigger operator intervention or may automatically cause the system 20 to perform the data loading module again; i.e., rescan the component 30. Conversely, if the system 20 determines that all the requisite C-scan data is available, then the system 20 may be configured to provide an indication that the C-scan data is acceptable and the remaining inspection process may be performed.

### Image Registration Data Quality Sub-Module:

If the system 20 determines that all of the requisite C-scan data files can be accessed (e.g., no corrupted or missing C-scan data files), then the system 20 may be configured to execute a registration process that aligns (i.e., "registers") the C-scan image (i.e., a 2-D scan image) with a geometric model produced by computer-aided design (CAD).

A stencil image is an example of a CAD geometric model that provides a template of the component 30. A stencil image may be generated offline from the inspection process and may be stored in memory (e.g., a control system 28 memory or the like) where it can be accessed by the control system 28. The stencil image may be produced using a scan plan file that is unique for each inspection system / component bin 24 architecture and a computer-aided design (CAD) model. The scan plan file may include system data acquisition information, including but not limited to information relating to signal trajectories, signal trigger points, and the like. As will be detailed herein, the CAD geometric model of the component 30 may be used to derive 3D scan coordinates of the component 30 from a 2D C-scan image.

In some embodiments, the CAD model may be configured with markings or "colored" regions that may be used in subsequent inspection modules of the present system 20; e.g., the markings / colored regions may be used to identify areas of interest of the component 30. In some embodiments, the scan plan file may be combined with the marked-colored CAD model of the component 30 to create a 2D image representation of the CAD model. In these embodiments, the system 20 (via stored instructions) may be configured to evaluate a potential anomaly (identified within the C-scan file) based on the combined scan plan file / marked-colored CAD file. For example, if the 2D coordinates of a potential anomaly overlap with a marked or colored region within the combined scan plan file / marked-colored CAD file, then that fact may be used in the assessment of the potential anomaly; i.e., a potential anomaly that overlaps with a marked-colored region increases the likelihood that the potential anomaly warrants further consideration, and potential anomaly that does not overlap with a marked-colored region decreases the likelihood that the potential anomaly warrants further consideration.

The image registration process that aligns the C-scan image to the CAD geometric model may include defining intensity patterns in the stencil image and then estimating the geometric transformation that modifies the C-scan image into the stencil image. The modified scan image becomes highly correlated with the stencil image, and the location and size of any potential anomalies detected on the modified C-scan image can be accurately predicted. The modified C-scan image may be referred to hereinafter as the "registered C-scan image". In some embodiments, the registered C-scan image may the signal amplitudes aligned with the stencil image generated from a 3D CAD model. In some embodiments, the registered C-scan image may be registered to an annotated or colored stencil image generated from a 3D CAD model.

### Partial Data - Data Quality Sub-Module:

Embodiments of the present disclosure system 20 may be configured to determine if the signal data within a C-scan completely represents the entire component 30, or whether portions of the scanning data are absent in the C-scan. This determination may be performed by the control system 28 performing calibration steps; e.g., via stored instructions. For example, a calibration component (sometimes referred to as "reference component") having known characteristics may be scanned by the system 20 for calibration purposes. The system 20 may be configured (e.g., via stored instructions) to compare the calibration scanning results to scanning results of a production component. If the scan image of the calibration component deviates from the scan image of the production component, the system 20 may produce a notification / flag highlighting the difference to the operator; e.g., that the signal data of the C-scan only reflects partial data (which may also be referred to as "incomplete" data).

In some embodiments, a calibration component may include only a portion of the geometric configuration of a component 30. The comparison with the production component in these instances may be based on the signal data collected for the portion of the production component that corresponds to the calibration component.

### System Drift Data Quality Sub-Module:

Continuous use of an ultrasonic sensing assembly 26 like that utilized in the present system 20, without routine calibration, may lead to locations on the component registered C-scan image with abnormally low and/or high signal amplitudes. This phenomenon may be referred to as "system drift". Artificially low amplitudes are particularly problematic because they hamper the detection of potential anomalies, which are typically identifiable by their lower amplitude signal characteristic. Embodiments of the present disclosure system 20 may be configured to address the potential for system drift, for example, by performing statistical analyses to determine not only if the distribution of signal amplitudes of a C-scan being analyzed is significantly different (i.e., low correlation) from that of a baseline (normal) C-scan, but also if the distribution is mostly on the lower end or the higher end compared to the reference C-scan. Embodiments of the present disclosure system 20 may be configured to issue a flag or other notification to the operator that the system 20 may be subject to system drift. If left unchecked, system drift may lead to the inspection workflow being negatively impacted by the quality of the C-scan.

### Shift of Scan Lines Data Quality Sub-Module:

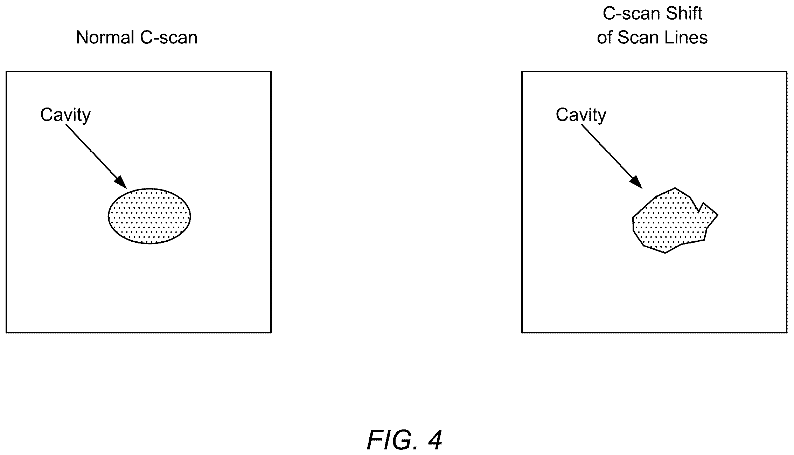

Embodiments of the present disclosure system 20 may also be configured to address the potential for misalignment and miscalibration of the ultrasonic sensing assembly 26 by evaluating pixel amplitude contours around cavities on a component 30. For example, misalignment and/or miscalibration will often cause the contour boundary of a cavity within a C-scan image to appear jagged relative to the contour boundary of the same cavity within a C-scan image produced by an ultrasonic sensing assembly 26 that is appropriately aligned and calibrated; e.g., see FIG. 4. Embodiments of the present disclosure may be configured to identify misalignment and miscalibration by evaluating pixel amplitude contours around cavities on a component 30; e.g., by comparing a "raw" contour of a cavity and a smoothed contour of the same cavity. The smoothed contour of the cavity may be determined, for example, by using a moving average of pixel amplitudes along the contour. In the event this quality assessment for evaluating the presence of misalignment and/or miscalibration determines the same, the present disclosure system 20 may be configured to issue a flag or other notification to the operator that the system 20 may be subject to misalignment and/or miscalibration.

### Compromised Signal Data Associated with Geometric Regions of the Component Data Quality Sub-Module:

The geometric configuration of some component regions may increase the potential for low amplitude ultrasonic response signals, thereby negatively impacting the ability of the ultrasonic sensing to identify potential anomalies in these regions. Embodiments of the present disclosure may be configured to utilize region-specific contours derived during the registration process described herein in conjunction with geometric constructs based on required distances and dimensions to detect unresolved areas within a region of interest within the C-scan image. If such a low amplitude region is detected (e.g., identifiable using a threshold value), embodiments of the present disclosure system 20 may be configured to modify the region of interest within the C-scan in order to yield an image region that is free from nuisance low-amplitude signals.

As indicated above, the data quality assessment module (via its sub-routines) provides an initial evaluation of the ultrasonic scan data in the present disclosure automated process. In the event a determination is made that a C-scan quality issue exists, the inspection of the component 30 may be terminated, or the data loading for that component 30 may be repeated, or the inspection of that component 30 may be flagged for operator intervention. Conversely, if the initial evaluation of the ultrasonic scan data performed by the data quality assessment module indicates that the scanned ultrasonic data is acceptable (e.g., within pre-determined standards), then the C-scan data may be forwarded to the Anomaly Detection module of the present disclosure automated inspection system 20.

### Anomaly Detection Module:

If the C-scan data for a component 30 fails the data quality assessment module evaluation (e.g., scan data is missing, corrupted, or partial), the present disclosure system 20 may be configured to alert the system operator that the component 30 does not meet basic data quality requirements and may need to be rescanned. Conversely, if the C-scan data passes the data quality assessment module evaluation, the registered C-scan image may then be analyzed to determine the existence of a potential anomaly within the component 30.

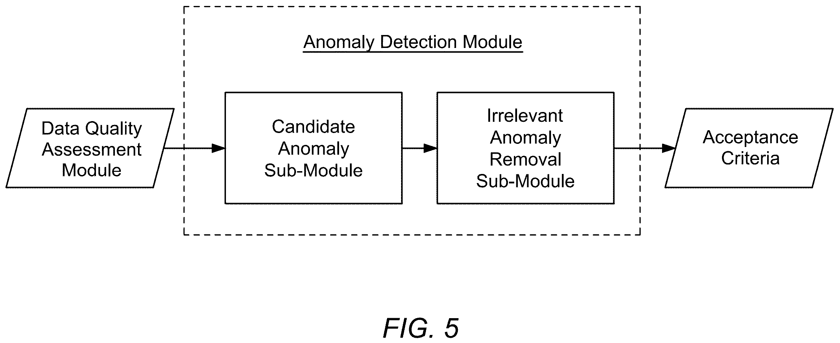

Referring to FIG. 5, the anomaly detection module may be described as having a candidate anomaly sub-module and an irrelevant anomaly removal sub-module. The candidate anomaly sub-module may utilize various analytical techniques to evaluate candidate (i.e., potential) anomalies. Non-limiting examples of analytical techniques that may be used include statistical techniques (e.g., summary statistics of amplitude data), computer vision (e.g., adaptive local and global thresholding), and machine learning/artificial intelligence (e.g., deep learning models for pattern recognition of 2-D images), and the like. In those embodiments that utilize a machine learning/artificial intelligence (ML/AI) analytical technique, the ML/AI model may be trained offline to recognize relevant and possibly irrelevant anomalies from a dataset of annotated C-scan images, and then classify each pixel of the registered C-scan image as either relevant, irrelevant, or not an anomaly. A potential anomaly that satisfies the evaluation criteria may be referred to as a "relevant anomaly" and a potential anomaly that does not satisfy the evaluation criteria may be referred to as a "irrelevant anomaly". A potential anomaly classified as an irrelevant anomaly may be removed from further consideration within the irrelevant anomaly removal sub-module.

One or more analytical techniques may be used to identify potential anomalies on different areas of a component 30. Additionally, each technique may be executed using different sets of parameters depending on both the area of the component 30 and the scan data channel. Additionally, each analytical technique may be executed using different sets of parameters depending on both the region of the component 30 and the ultrasonic scan data channel. In some embodiments, a first analytical technique may be used to identify potential anomalies in a first region of the component 30, and a second analytical technique may be used to identify potential anomalies in a second region of the component 30; i.e., a plurality of analytical techniques may be used to identify potential anomalies within the signal data of a given component 30. The present disclosure system 20 may be configured to ignore pixels on the registered C-scan image that belong to regions of no concern, such as cavities, or pixels outside the part's boundary.

A non-limiting example of an evaluation criterion is a minimum number of low-amplitude pixels within a region of a registered C-scan image. A low-amplitude pixel may be defined using an amplitude threshold. In some embodiments, a single amplitude threshold may be used for any region of a registered C-scan image of a component 30. In some embodiments, more than one amplitude threshold may be used; e.g., a first amplitude threshold in a first region of a registered C-scan image, a second amplitude threshold in a second region of a registered C-scan image, and so on to account for localized amplitude patterns. The present disclosure is not limited to using low-amplitude pixels as the evaluation criterion.

In some embodiments, an amplitude threshold (or other evaluation criterion) may be used to create a masked portion within a registered C-scan image. Pixels within the C-scan image with an amplitude value equal to or below the threshold may be assigned a positive number (e.g., 1 or 255), and pixels with an amplitude value above the threshold are assigned a zero value. In this example, those pixels within the masked registered C-scan image having a positive value may be further analyzed to verify if they meet the criteria to be considered a relevant anomaly.

In some embodiments, the irrelevant anomaly removal sub-module may be configured to remove borderline irrelevant indications that may have been classified as relevant indications, but were so classified with low confidence or other quality measure. Rule-based or heuristics may be used to help cleanup any false positives. For example, the C-scan image of aluminum fan blades may exhibit several pixels with low amplitudes along the gaps between the cover and sheath in multiple locations. These so-called gap fill indications are considered to be acceptable or irrelevant, and do not need to be reported. Embodiments of the present disclosure may utilize a heuristic approach to detect and discard gap fill indications by determining the extent of the overlap (e.g., intersection over union metric) between candidate anomalies and prespecified gap fill locations.

The output of the anomaly detection module may include a list of potential anomalies within a given component 30 along with characteristics for each respective potential anomaly. The anomaly characteristics may include, but are not limited to, pixel coordinates within a C-scan image, the size of the potential anomaly, the location of the potential anomaly within the component 30, summary statistics of ultrasonic signal amplitudes within a contour of the potential anomaly, and the like.

### Acceptance Criteria Module:

The anomaly detection module may be configured to produce an output for each potential anomaly identified in the anomaly detection module. The output may be a "pass" disposition or a "fail" disposition.

The determination of a disposition may be based on acceptance criteria; e.g., a set of rules / stored instructions accessible / executable by the control system 28. The rules may include one or more of: (1) limits on the number of potential anomalies within a predetermined region of a component 30; (2) the relative locations of the potential anomalies; (3) a maximum size allowed for any potential anomaly within a given region area of a component 30, and the like. This listing of rules represents an example of acceptable rules that may be used, and the present disclosure is not limited thereto. In some embodiments, the set of rules may be based on operator-specified acceptance criteria. The system 20 may be configured to allow an existing set of rules and/or acceptance criteria to be modified; e.g., updated, added to, refined, or the like. A modification to the set of rules and/or the acceptance criteria may be based on operator input, or may be based on algorithmic input. An example of the latter may occur when the system 20 utilizes machine learning/artificial intelligence (ML/AI) analytical techniques. Hence, some present disclosure systems 20 may be configured to automatically modify the set of rules and/or the acceptance criteria without direct operator input.

In some present disclosure embodiments, the system 20 may be configured to perform an uncertainty quantification action to assign a confidence grading to the determination of a disposition. A confidence grading may be desirable as an indicator of factors associated disposition of a potential anomaly. For example, the level of inherent scanning process noise present during the scanning process may negatively affect the scanning process. In an instance wherein the characteristics of a potential anomaly are relatively close to acceptance criteria limits (e.g., size or bordering two or more areas with different limits), it may be useful to also consider additional factors such as signal noise; e.g., a high signal noise level may be reflected in a lower confidence grading, whereas a low signal noise level may be reflected in a higher confidence grading. An example of a confidence grading may be a written term such as "low confidence" or "high confidence", or the like. Another example of a confidence grading may be a numeric value such as zero to one hundred (0-100), where the zero value indicates the lowest confidence level and the one hundred value indicates the highest confidence level. The present disclosure is not limited to these confidence grading examples.

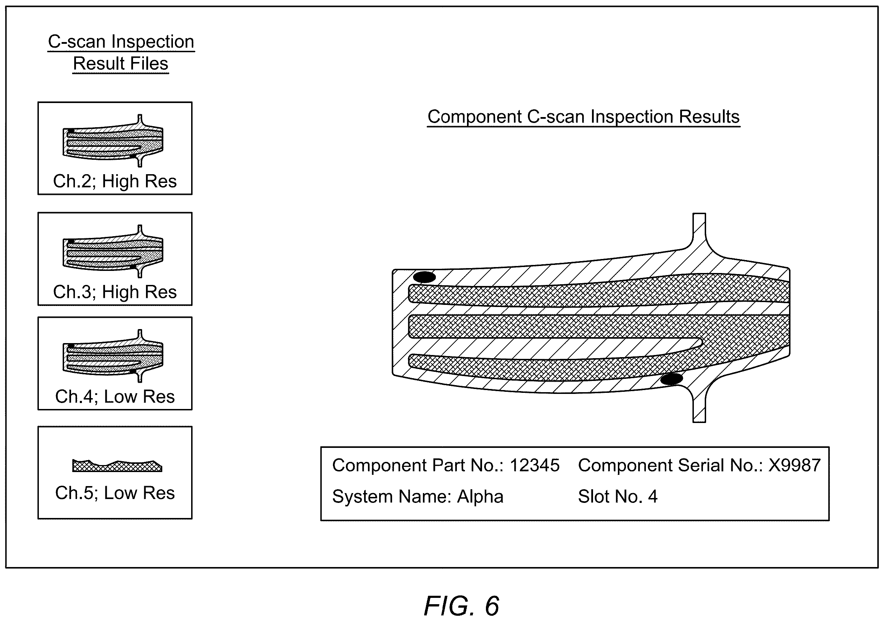

After all detected potential anomalies have been analyzed and dispositioned, or in a case where no potential anomalies have been detected, embodiments of the present disclosure may be configured to produce an output with relevant information; i.e., a component report. For example, the output report may indicate that in a given component 30 no potential anomalies were detected, or "N' number of potential anomalies were detected. In the event one or more potential anomalies were detected in a given component 30, the output may include information specific to each detected anomaly; e.g., location size, and the like. The information provided in the output report may be in a text format, or in a graphic format, or any combination thereof. The output may be presented in an electronic format (e.g., on a visual display), or in a printed format, or any combination thereof. FIG. 6 is a representation of information in an output report in a visual format, illustrating a C-scan image from a given channel / given resolution and indicating windows for viewing alternative C-scan images from other channels and resolutions. The displayed report also indicates other information regarding the component 30 and the inspection process provided in written form. The exemplary display shown in FIG. 6 is intended to diagrammatically illustrate a display of output information that may be provided by the system 20 to enable an operator to view the results for a given component 30. The present disclosure is not limited to this example.

In some embodiments, information collected / produced during the inspection process may be saved and stored electronically, thereby established an inspection record for a given component 30. The inspection reports are understood to be valuable for auditing purposes. The inspection reports can also be used for component analytical purposes; e.g., statistical analysis regarding particular types of anomalies, characteristics of those anomalies, location of those anomalies, and so on. Importantly, the inspection reports also allow an operator to review inspection data in near real-time. In addition to creating an inspection report, the present disclosure system 20 provides several other benefits. For example, the present disclosure system 20 provides uniformity to the inspection process; e.g., each component 30 inspected may be inspected in exactly the same manner thereby eliminating inspection variability. As another example, human-performed component inspection processes very likely always include some degree of undesirable subjectivity and error. The methodology of the present disclosure system 20 greatly mitigates (and may eliminate) subjectivity and error. In those present disclosure system 20 embodiments that are configured for group processing, it is understood that there is considerable cost and time savings.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Headings used herein are for organizational purposes only and are not meant to be used to limit the scope of the description or the enclosed claims.

## Claims

1. A method of inspecting a component for an anomaly, the method comprising:
performing a through-transmission ultrasonic (TTUT) inspection of a component, the TTUT inspection producing response signals;
producing a C-scan map based on the response signals;
performing an initial quality assessment of the C-scan map to determine if the C-scan map is acceptable or unacceptable;
if the C-scan map is determined to be acceptable, performing a secondary quality assessment of the C-scan map that includes registering the C-scan map with a computer-aided design file representing the component;
producing a registered C-scan image using the C-scan map and the registered computer-aided design file;
analyzing the registered C-scan image to determine the presence of a potential anomaly in the component;
for a potential anomaly determined as being present, classifying the potential anomaly as a relevant anomaly or an irrelevant anomaly; and
reporting any said relevant anomaly present in the component.

2. The method of claim 1, wherein the component has a first side surface and a second side surface, and wherein the first side surface is opposite the second side surface; and
the step of performing the TTUT inspection of the component includes:
using an ultrasonic transmitter to produce first ultrasonic signals incident to the first side surface; and
using an ultrasonic receiver to receive second ultrasonic signals emitted from the second side surface, which second ultrasonic signals result from the incident first ultrasonic signals, and wherein the ultrasonic receiver produces the response signals, and the response signals are representative of the second ultrasonic signals that have traversed the component from the first side surface to the second side surface.

3. The method of claim 2, wherein a corrupt C-scan map is unacceptable, and / or
wherein the C-scan map is a two-dimensional (2D) map of signal amplitudes of the response signals.

4. The method of claim 3, wherein the registered C-scan image is produced by aligning the said signal amplitudes in the original C-scan map to a stencil image generated from a three-dimensional computer-aided model.

5. The method of claim 4, wherein the secondary quality assessment of the C-scan map includes determining whether the C-scan map completely represents an interrogation region of the component or partially represents the interrogation region of the component.

6. The method of claim 5, wherein the step of determining whether the C-scan map completely represents the interrogation region of the component or partially represents the interrogation region of the component includes a calibration step.

7. The method of claim 4, wherein the secondary quality assessment of the C-scan map includes determining a presence of system drift.

8. The method of claim 7, wherein the step of determining the presence of system drift includes performing a statistical analysis of the signal amplitudes to determine if a distribution of signal amplitudes in the C-scan map is shifted from of a distribution of signal amplitudes in a reference C-scan map.

9. The method of claim 4, wherein the secondary quality assessment of the C-scan map includes determining a scan line drift by analyzing a signal amplitude contour surrounding a cavity in the component.

10. The method of claim 9, wherein the step of analyzing a said signal amplitude contour surrounding a said cavity in the component includes comparing the signal amplitude contour surrounding the cavity to a smoothed signal amplitude contour surrounding the cavity.

11. The method of claim 4, wherein the secondary quality assessment of the C-scan map includes identifying a low signal amplitude region that is attributable to a geometric region of the component and not attributable to a potential anomaly.

12. The method of any preceding claim, wherein the step of performing the TTUT inspection of the component includes performing a plurality of said TTUT inspections; and
wherein the step of producing a said C-scan map based on the response signals includes producing a said C-scan map based on the response signals for each respective TTUT inspection; and
wherein the step of performing the initial quality assessment of the C-scan map includes performing the initial quality assessment of the C-scan map for each TTUT inspection, and the initial quality assessment further includes determining if any TTUT inspection of the plurality of TTUT inspections is unavailable, and if any TTUT inspection of the plurality of TTUT inspections is unavailable then the inspection process of the component is terminated.

13. The method of claim 12, wherein a first TTUT inspection of the plurality of TTUT inspections is performed at a first resolution, and a second TTUT inspection of the plurality of TTUT inspections is performed at a second resolution, wherein the first resolution is different from the second resolution.

14. A system for inspecting a component for an anomaly, the component having a first side surface and a second side surface, and wherein the first side surface is opposite the second side surface, the system comprising:
an ultrasonic transmitter;
an ultrasonic receiver;
a controller in communication with the ultrasonic transmitter, the ultrasonic receiver, and a non-transitory memory storing instructions, wherein the controller is configured to execute the instructions and the executed instructions cause the controller to:
control the ultrasonic transmitter to produce first ultrasonic signals incident to the first side surface;
control the ultrasonic receiver to receive second ultrasonic signals emitted from the second side surface, which second ultrasonic signals result from the incident first ultrasonic signals, and produce response signals representative of the second ultrasonic signals that have traversed the component from the first side surface to the second side surface;
produce a C-scan map based on the response signals;
perform an initial quality assessment of the C-scan map to determine if the C-scan map is acceptable or unacceptable;
if the C-scan map is determined to be acceptable, perform a secondary quality assessment of the C-scan map that includes registering the C-scan map with a computer-aided design file representing the component;
produce a registered C-scan image using the C-scan map and a stencil image generated from a computer-aided design file;
analyze the registered C-scan image to determine the presence of a potential anomaly in the component;
for a potential anomaly determined as being present, classify the potential anomaly as a relevant anomaly or an irrelevant anomaly; and
report any said relevant anomaly present in the component.

15. The system of claim 14, wherein the C-scan map is a two-dimensional (2D) map of signal amplitudes of the response signals, and the registered C-scan image includes an aligned image between said signal amplitudes and the stencil image,
wherein, optionally, the secondary quality assessment of the C-scan map includes determining whether the C-scan map completely represents an interrogation region of the component or partially represents the interrogation region of the component,
wherein, optionally, the secondary quality assessment of the C-scan map includes determining a presence of system drift,
wherein, optionally, the secondary quality assessment of the C-scan map includes determining a scan line drift by analyzing a signal amplitude contour surrounding a cavity in the component,
wherein, optionally, the secondary quality assessment of the C-scan map includes identifying a low signal amplitude region that is attributable to a geometric region of the component and not attributable to a potential anomaly.
